# EUROPEAN PATENT APPLICATION

(11) **EP 4 682 662 A1**
(43) Date of publication of application: **21.01.2026**
(21) Application number: 24777853.3
(22) Date of filing: 21.03.2024
(51) Int. Cl.: G05D 1/43

(54) **CONTROL METHOD AND APPARATUS, AND INTELLIGENT DRIVING DEVICE**

(30) Priority: 31.03.2023 CN 202310382837
(71) Applicant: Shenzhen Yinwang Intelligent Technologies Co., Ltd., Shenzhen, Guangdong 518110 (CN)
(72) Inventor: LI, Xibin, Shenzhen, Guangdong 518129 (CN); FAN, Weiwei, Shenzhen, Guangdong 518129 (CN)
(74) Representative: Pfenning, Meinig & Partner mbB
(86) International application number: PCT/CN2024/082896
(87) International publication number: WO 2024/199064

(57) **Abstract**

A control method (600) and apparatus (1300), and an intelligent driving device (100) are provided. The control method (600) is applied to the field of intelligent driving. The control method (600) includes: obtaining a first traveling status of the intelligent driving device (100), where the intelligent driving device (100) includes a detection apparatus (110) (S610); and controlling a vertical field of view FOV of the detection apparatus (110) based on the first traveling status (S620). An FOV of a lidar is controlled based on a traveling status of the intelligent driving device (100). This helps meet performance requirements of the intelligent driving device (100) in different traveling statuses.

## Description

### TECHNICAL FIELD

This application relates to the field of intelligent driving, and more specifically, to a control method and apparatus, and an intelligent driving device.

### BACKGROUND

As one of the most important sensors of an intelligent driving device (for example, a vehicle), a lidar sends and receives laser beams via a transceiver device, to accurately scan an ambient environment. Point cloud data generated by the lidar can implement features such as a long detection distance, high resolution, a large field of view, and no external interference, and provides accurate and stable external environment information for the intelligent driving device in a complex and uncertain external driving environment. Currently, a working mode of the lidar is fixed, which cannot meet requirements of the intelligent driving device in different application scenarios.

### SUMMARY

This application provides a control method and apparatus, and an intelligent driving device, so that a vertical field of view (field of view, FOV) of a lidar can be controlled based on a traveling status of the intelligent driving device, to help meet performance requirements of the intelligent driving device in different traveling statuses.

According to a first aspect, this application provides a control method. The method may be performed by an intelligent driving device, or may be performed by a computing platform of an intelligent driving device, or may be performed by a chip, a processor, or a circuit used in an intelligent driving device. This is not limited in this application.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation means like an airplane or a ship.

The method includes: obtaining a first traveling status of an intelligent driving device, where the intelligent driving device includes a detection apparatus; and controlling a vertical FOV of the detection apparatus based on the first traveling status.

Based on the foregoing technical solution, the intelligent driving device may control the vertical FOV of the detection apparatus based on the traveling status of the intelligent driving device. In this way, the vertical FOV does not need to be adjusted by increasing a quantity of transceiver devices in the intelligent driving device, which helps reduce production costs of the intelligent driving device. In addition, the vertical FOV is adjusted in different traveling statuses, which helps improve scenario adaptability of the detection apparatus and consider sensing performance in different traveling statuses.

With reference to the first aspect, in some implementations of the first aspect, the detection apparatus is a lidar.

With reference to the first aspect, in some implementations of the first aspect, the controlling a vertical field of view FOV of the detection apparatus based on the first traveling status includes: when the first traveling status indicates that a speed of the intelligent driving device is greater than or equal to a preset speed, controlling the vertical FOV of the detection apparatus to be a first FOV, or controlling an angle between a lower edge of the vertical FOV of the detection apparatus and a ground to be a first angle; or when the first traveling status indicates that the speed of the intelligent driving device is less than the preset speed or the intelligent driving device is in a parking state, controlling the vertical FOV of the detection apparatus to be a second FOV, or controlling the angle between the lower edge of the vertical FOV of the detection apparatus and the ground to be a second angle, where the first FOV is less than the second FOV, and the first angle is less than the second angle.

Based on the foregoing technical solution, when the speed of the intelligent driving device is greater than or equal to the preset speed (or the intelligent driving device is in a high-speed cruise scenario), a requirement for the vertical FOV is small. In this case, the detection apparatus may be controlled to detect an object with a small vertical FOV. When the speed of the intelligent driving device is less than the preset speed (or the intelligent driving device is in a low-speed scenario) or the intelligent driving device is in the parking state, the vertical FOV of the detection apparatus may be controlled to increase, or the angle between the lower edge of the vertical FOV of the detection apparatus and the ground is increased. This can reduce a ground blind spot, and can help the detection apparatus detect more obstacles, thereby helping improve safety of the intelligent driving device.

With reference to the first aspect, in some implementations of the first aspect, the method further includes: controlling a transmit power of the detection apparatus based on the first traveling status.

Based on the foregoing technical solution, the intelligent driving device may control the transmit power of the detection apparatus based on the traveling status of the intelligent driving device. In this way, the transmit power does not need to be adjusted by increasing a quantity of transceiver devices in the intelligent driving device, which helps reduce production costs of the intelligent driving device. In addition, the transmit power is adjusted in different traveling statuses, which helps improve scenario adaptability of the detection apparatus and consider sensing performance in different traveling statuses.

With reference to the first aspect, in some implementations of the first aspect, the controlling a transmit power of the detection apparatus based on the first traveling status includes: when the first traveling status indicates that the speed of the intelligent driving device is greater than or equal to the preset speed, controlling the transmit power of the detection apparatus to be a first transmit power; or when the first traveling status indicates that the speed of the intelligent driving device is less than the preset speed or the intelligent driving device is in the parking state, controlling the transmit power of the detection apparatus to be a second transmit power, where the first transmit power is greater than the second transmit power.

Based on the foregoing technical solution, when the intelligent driving device is in the high-speed cruise scenario, ranging performance of the detection apparatus can be improved by increasing the transmit power of the detection apparatus, thereby helping improve safety of the intelligent driving device in the high-speed cruise scenario. When the intelligent driving device is in a low-speed traveling scenario or the parking state, because a requirement for ranging performance is not high, the transmit power of the detection apparatus can be controlled to be reduced. This helps save power consumption of the intelligent driving device, facilitate human eye safety, and increase an endurance mileage of an electric vehicle.

With reference to the first aspect, in some implementations of the first aspect, the method further includes: when the first traveling status indicates that the speed of the intelligent driving device is less than the preset speed or the intelligent driving device is in the parking state, controlling the detection apparatus to send a plurality of pulse signals in a first transmission cycle, where the plurality of pulse signals have different transmit powers.

Based on the foregoing technical solution, when the intelligent driving device is in the low-speed traveling scenario or the parking state, the detection apparatus may be controlled to transmit a plurality of pulse signals with different transmit powers in one transmission cycle. For example, using low reflection energy can resolve a problem of an insufficient dynamic range of a receiving component, and avoid saturation of an echo signal of a target with high reflectivity. For another example, using high emission energy can improve a detection capability of a target with low reflectivity.

With reference to the first aspect, in some implementations of the first aspect, the method further includes: processing, based on the transmit powers of the plurality of pulse signals, an echo signal received by the detection apparatus.

Based on the foregoing technical solution, the echo signal received by the detection apparatus is processed by using the transmit powers of the plurality of pulse signals. In this way, crosstalk between different types of laser can be prevented, and accuracy of detecting an obstacle by the intelligent driving device can be improved.

In some possible implementations, the processing, based on the transmit powers of the plurality of pulse signals, an echo signal received by the detection apparatus may also be understood as encoding or sorting the plurality of pulse signals.

With reference to the first aspect, in some implementations of the first aspect, the detection apparatus includes a vertical oscillating mirror, and the controlling a vertical field of view FOV of the detection apparatus includes: controlling a scanning range of the vertical oscillating mirror.

Based on the foregoing technical solution, the vertical FOV can be adjusted by controlling the scanning range of the vertical oscillating mirror. This helps improve scenario adaptability of the detection apparatus and consider sensing performance in different traveling statuses. For example, when the vehicle is in the parking state, a range of a ground blind spot may be reduced.

With reference to the first aspect, in some implementations of the first aspect, the detection apparatus is a micro-electro-mechanical system MEMS lidar, the MEMS lidar includes a micromirror, and the controlling a vertical field of view FOV of the detection apparatus includes: controlling a rotation angle of the micromirror.

Based on the foregoing technical solution, an included angle between a lower edge of the vertical FOV and the ground can be adjusted by controlling the rotation angle of the micromirror. This helps improve scenario adaptability of the detection apparatus and consider sensing performance in different traveling status. For example, when the vehicle is in the parking state, a range of a ground blind spot may be reduced. In addition, this can avoid excessive stress on a rotating shaft of a micromirror in the MEMS lidar, and avoid impact of the excessive stress on a service life of the rotating shaft of the micromirror.

In some possible implementations, controlling a rotation angle of the micromirror may also be understood as controlling a mounting angle of the micromirror.

In some possible implementations, the method further includes: compensating for point cloud angle information based on the rotation angle of the micromirror.

According to a second aspect, a control apparatus is provided. The apparatus includes: an obtaining unit, configured to obtain a first traveling status of an intelligent driving device, where the intelligent driving device includes a detection apparatus; and a control unit, configured to control a vertical field of view FOV of the detection apparatus based on the first traveling status.

With reference to the second aspect, in some implementations of the second aspect, the control unit is configured to: when the first traveling status indicates that a speed of the intelligent driving device is greater than or equal to a preset speed, control the vertical FOV of the detection apparatus to be a first FOV, or control an angle between a lower edge of the vertical FOV of the detection apparatus and a ground to be a first angle; or when the first traveling status indicates that the speed of the intelligent driving device is less than the preset speed or the intelligent driving device is in a parking state, control the vertical FOV of the detection apparatus to be a second FOV, or control the angle between the lower edge of the vertical FOV of the detection apparatus and the ground to be a second angle, where the first FOV is less than the second FOV, and the first angle is less than the second angle.

With reference to the second aspect, in some implementations of the second aspect, the control unit is further configured to control a transmit power of the detection apparatus based on the first traveling status.

With reference to the second aspect, in some implementations of the second aspect, the control unit is further configured to: when the first traveling status indicates that the speed of the intelligent driving device is greater than or equal to the preset speed, control the transmit power of the detection apparatus to be a first transmit power; or when the first traveling status indicates that the speed of the intelligent driving device is less than the preset speed or the intelligent driving device is in the parking state, control the transmit power of the detection apparatus to be a second transmit power, where the first transmit power is greater than the second transmit power.

With reference to the second aspect, in some implementations of the second aspect, the control unit is configured to: when the first traveling status indicates that the speed of the intelligent driving device is less than the preset speed or the intelligent driving device is in the parking state, control the detection apparatus to send a plurality of pulse signals in a first transmission cycle, where the plurality of pulse signals have different transmit powers.

With reference to the second aspect, in some implementations of the second aspect, the apparatus further includes: a signal processing unit, configured to process, based on the transmit powers of the plurality of pulse signals, an echo signal received by the detection apparatus.

With reference to the second aspect, in some implementations of the second aspect, the detection apparatus includes a vertical oscillating mirror, and the control unit is configured to control a scanning range of the vertical oscillating mirror.

With reference to the second aspect, in some implementations of the second aspect, the detection apparatus is a micro-electro-mechanical system MEMS lidar, the MEMS lidar includes a micromirror, and the control unit is configured to control a rotation angle of the micromirror.

With reference to the second aspect, in some implementations of the second aspect, the detection apparatus is a lidar.

According to a third aspect, this application provides a control apparatus. The apparatus includes a processing unit and a storage unit. The storage unit is configured to store instructions. The processing unit executes the instructions stored in the storage unit, so that the apparatus performs any possible control method in the first aspect.

According to a fourth aspect, this application provides a control system. The control system includes a detection apparatus and a computing platform, and the computing platform includes any possible control apparatus in the second aspect, or includes the control apparatus in the third aspect.

According to a fifth aspect, this application provides an intelligent driving device. The intelligent driving device includes any possible control apparatus in the second aspect, or includes the control apparatus in the third aspect, or includes the control system in the fourth aspect.

With reference to the fifth aspect, in some implementations of the fifth aspect, the intelligent driving device is a vehicle.

According to a sixth aspect, this application provides a computer program product. The computer program product includes computer program code. When the computer program code is run on a computer, the computer is enabled to perform any possible control method in the first aspect.

It should be noted that all or some of the computer program code may be stored in a first storage medium. The first storage medium may be packaged together with a processor, or may be packaged separately from a processor. This is not specifically limited in embodiments of this application.

According to a seventh aspect, this application provides a computer-readable medium. The computer-readable medium stores program code. When the computer program code is run on a computer, the computer is enabled to perform any possible control method in the first aspect.

According to an eighth aspect, this application provides a chip. The chip includes a circuit. The circuit is configured to perform any possible control method in the first aspect.

### BRIEF DESCRIPTION OF DRAWINGS

FIG. 1 is a functional block diagram of an intelligent driving device according to an embodiment of this application;
FIG. 2 is a block diagram of a control system according to an embodiment of this application;
FIG. 3 is a diagram of configuring parameters of a detection apparatus according to an embodiment of this application;
FIG. 4 shows point cloud data identified when objects with different reflectivity exist on a column according to an embodiment of this application;
FIG. 5 is a diagram of a ground blind spot according to an embodiment of this application;
FIG. 6 is a schematic flowchart of a control method according to an embodiment of this application;
FIG. 7 is a diagram of a vertical FOV and a detection distance of a lidar in a long-distance mode according to an embodiment of this application;
FIG. 8 is a diagram of a vertical FOV and a detection distance of a lidar in a short-distance mode according to an embodiment of this application;
FIG. 9 is another diagram of a vertical FOV and a detection distance of a lidar in a short-distance mode according to an embodiment of this application;
FIG. 10 is a diagram of a transmit power and frequency of a lidar in a short-distance mode and a long-distance mode according to an embodiment of this application;
FIG. 11 is a diagram of a vertical FOV adjustment manner according to an embodiment of this application;
FIG. 12 is another diagram of a vertical FOV adjustment manner according to an embodiment of this application; and
FIG. 13 is a block diagram of a control apparatus according to an embodiment of this application.

### DESCRIPTION OF EMBODIMENTS

In descriptions of embodiments of this application, "/" means or unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

The following describes technical solutions of embodiments in this application with reference to accompanying drawings.

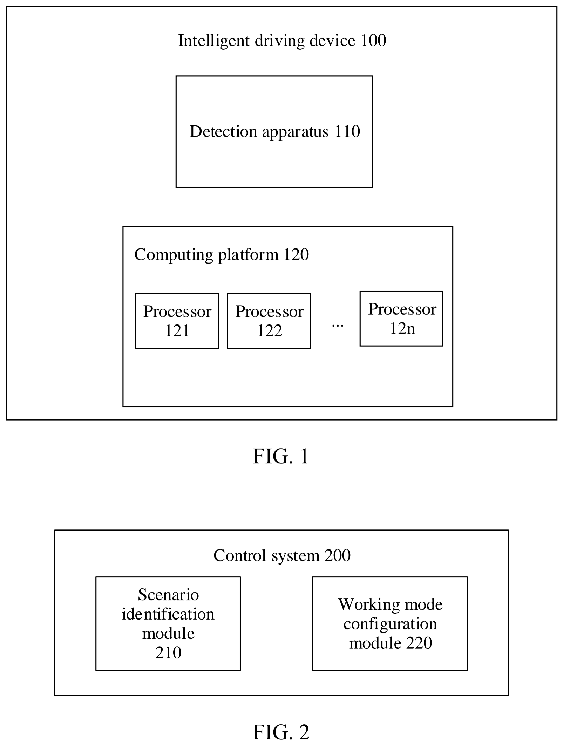

FIG. 1 is a functional block diagram of an intelligent driving device 100 according to an embodiment of this application. The intelligent driving device 100 may include a detection apparatus 110 and a computing platform 120. The detection apparatus 110 may include one or more sensors that sense information about an environment around the intelligent driving device 100. For example, the detection apparatus 110 may include one or more of a lidar, a millimeter-wave radar, a centimeter-wave radar, and an ultrasonic radar.

Some or all functions of the intelligent driving device 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

FIG. 2 is a block diagram of a control system 200 according to an embodiment of this application. The control system 200 may include a scenario identification module 210 and a working mode configuration module 220. The scenario identification module 210 may determine, based on data collected by one or more of a camera, a light sensor, a rain level sensor, a wheel speed sensor, or an inertia measurement unit, an application scenario (for example, a sunny day or a rainy or snowy day) in which the intelligent driving device is currently located or a traveling status (for example, a cruise mode or a parking mode) of the intelligent driving device 100. The scenario identification module 210 may periodically send the application scenario or the traveling status to the working mode configuration module 220. The working mode configuration module 220 dynamically adjusts the working status of the detection apparatus after receiving the application scenario or the traveling status. For example, the working mode configuration module 220 may adjust parameters such as an FOV (including a horizontal FOV and a vertical FOV), a scanning speed, a point cloud frame rate, ranging performance, and a quantity of echoes of the lidar based on the foregoing application scenario or traveling status.

In an embodiment, the scenario identification module 210 and the working mode configuration module 220 may be located in the foregoing computing platform 120. For example, the scenario identification module 210 and the working mode configuration module 220 may be located in a domain controller (domain controller). Different domain controllers are classified based on dedicated functions, for example, a control domain controller (control domain controller) that controls a running status of a vehicle body. Different domain controllers may be connected to sensors and actuators that have different functions. For example, the domain controller may be a mobile data center (mobile data center, MDC), and the MDC may be configured to implement an autonomous driving function. For another example, the domain controller may be a smart cockpit domain controller (cockpit domain controller, CDC), a vehicle domain controller (vehicle domain controller, VDC), or the like. The CDC may be configured to implement cockpit control, and the VDC may be configured to implement vehicle function control (for example, steering or braking).

The mobile data center, the cockpit domain controller, the vehicle domain controller, and the like in embodiments of this application may have other names. In this application, only the MDC, the CDC, the VDC, and the like are used as examples, and are not intended to limit a specific implementation.

In an embodiment, the scenario identification module 210 may be located in the foregoing computing platform 120, and the working mode configuration module 220 may be located in the foregoing detection apparatus 110. For example, the working mode configuration module 220 may be located in a lidar or a millimeter-wave radar.

In an embodiment, for example, the intelligent driving device 100 is a vehicle. The scenario identification module 210 periodically sends the application scenario or the traveling status to the lidar through an Ethernet or a controller local area network (controller area network, CAN) packet.

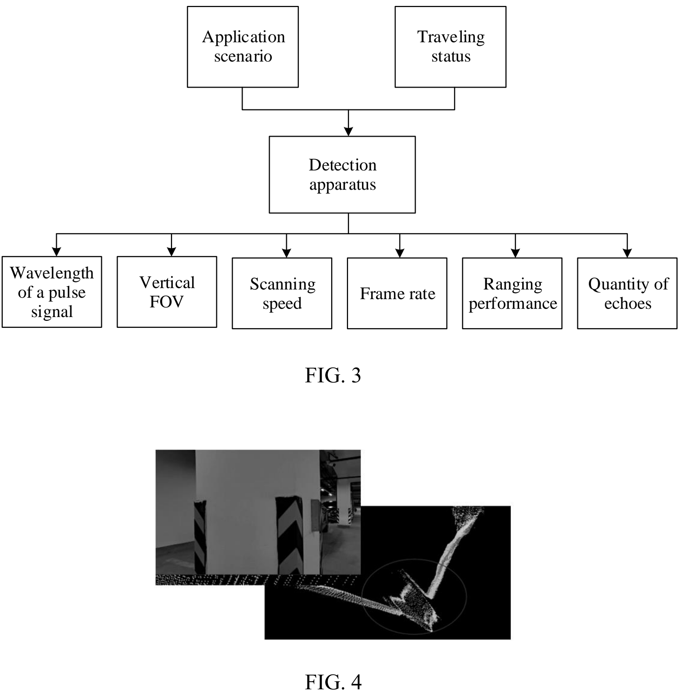

FIG. 3 is a diagram of configuring parameters of a detection apparatus according to an embodiment of this application. For example, the detection apparatus is a lidar. The lidar may obtain information that is about an application scenario or a traveling status and that is sent by the computing platform 120. For example, the application scenario includes a weather status of the intelligent driving device, for example, a sunny day, a night, a rainy day, or a snowy day. For another example, the traveling status may include a vehicle speed status and a driving mode. The vehicle speed status is as follows: The intelligent driving device is currently in a static state, or a speed of the intelligent driving device is in (0, 30 km/h), or a speed of the intelligent driving device is greater than or equal to 30 km/h. For example, the intelligent driving device is a vehicle, and the traveling status may be that the vehicle is in a parking state, a cruise state, or the like. The lidar may adjust, based on the foregoing application scenario or driving mode, one or more of a wavelength of a pulse signal transmitted by the lidar, an FOV (including a horizontal FOV and a vertical FOV) of the lidar, a scanning speed, a frame rate, ranging performance, and a quantity of echoes.

For example, Table 1 shows a correspondence between an application scenario or a traveling status and a parameter of the lidar.

**Table 1**

| Application scenario or traveling status | Parameters of the lidar |
|---|---|
| Sunny day | Single echo |
| Rainy day or snowy day | A plurality of echoes |
| At the speed of (0, 30 km/h) | The transmit power is 30 watts (Watts, W), and the vertical FOV is 40° |
| At a speed greater than or equal to 30 km/h | The transmit power is 60 W, and the vertical FOV is 25° |
| In the parking state | The transmit power is 30 W, the vertical FOV is 40°, and the frame rate is 10 Hz |
| ... | ... |

The correspondence between the application scenario or the driving mode and the parameter of the lidar in Table 1 is merely an example. This is not specifically limited in embodiments of this application.

For example, the vehicle is in a parking state or in a low-speed scenario (for example, a speed of the vehicle is less than 30 km/h). A lidar in a current fixed working mode has the following application problems:
(1) There are problems such as short-distance noise and laser crosstalk due to a high laser transmit power.
(2) Human eyes may be exposed to safety risks during use at a short distance.
(3) Distances measured by targets with different reflectivity (especially targets with high reflectivity) are inaccurate. FIG. 4 shows point cloud data identified when objects with different reflectivity exist on a column according to an embodiment of this application. As shown in FIG. 4, because objects with different reflectivity exist on the column, distances between the vehicle and the column that are identified based on the point cloud data are different.
(4) An excessively small FOV leads to a short-distance ground blind spot.

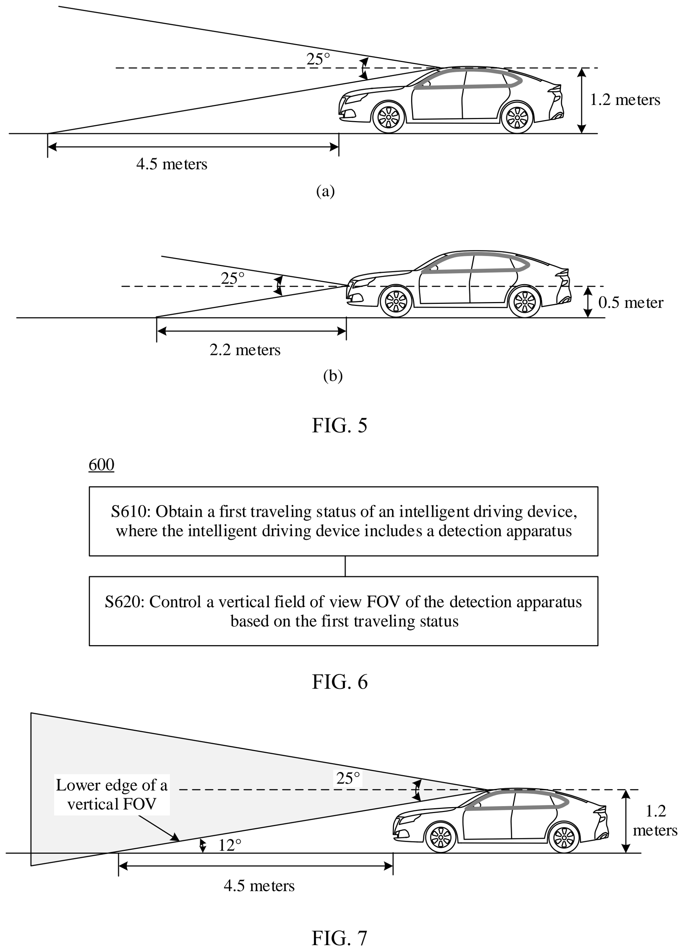

FIG. 5 is a diagram of a ground blind spot according to an embodiment of this application.

As shown in (a) in FIG. 5, for a lidar whose vertical FOV is 25° and whose mounting height is 1.2 meters, a 4.5-meter ground blind spot exists.

As shown in (b) in FIG. 5, for a lidar whose vertical FOV is 25° and whose mounting height is 0.5 meter, a 2.2-meter ground blind spot exists. The ground blind spot may cause the vehicle to have limited cognition of a ground structure, and therefore may affect driving safety of a driver.

In view of this, embodiments of this application provide a control method and apparatus, and an intelligent driving device. In different application scenarios or traveling statuses, the intelligent driving device may support configuration of different parameters for a detection apparatus, to help meet performance requirements of the intelligent driving device in different traveling statuses.

FIG. 6 is a schematic flowchart of a control method 600 according to an embodiment of this application. The method 600 may be performed by the intelligent driving device 100 shown in FIG. 1, or the method 600 may be performed by the computing platform 120, or the method 600 may be performed by a system including the computing platform 120 and the detection apparatus 110, or the method 600 may be performed by a system-on-chip (system-on-chip, SoC) on the computing platform 120, or the method 600 may be performed by a processor on the computing platform 120, or the method 600 may be performed by the detection apparatus 110. The method 600 includes the following steps.

S610: Obtain a first traveling status of an intelligent driving device, where the intelligent driving device includes a detection apparatus.

Optionally, the detection apparatus may be a lidar, a millimeter-wave radar, or a centimeter-wave radar.

Optionally, that the intelligent driving device is a vehicle is used as an example. The first traveling status may include a driving mode of the vehicle and/or a speed of the vehicle.

For example, the first traveling status is follows: The vehicle is in a short-distance mode or a long-distance mode. In the short-distance mode, the speed of the vehicle may be less than a preset speed, or in the short-distance mode, the vehicle may be in a parking state. In the long-distance mode, the speed of the vehicle may be greater than or equal to the preset speed.

For example, the preset speed may be 30 km/h.

S620: Control a vertical field of view FOV of the detection apparatus based on the first traveling status.

Optionally, the controlling a vertical FOV of the detection apparatus includes: controlling a size of the vertical FOV of the detection apparatus, and/or controlling an angle between a lower edge of the vertical FOV and a ground.

Optionally, the intelligent driving device includes a correspondence between a traveling status and the vertical FOV, and the controlling a vertical FOV of the detection apparatus based on the first traveling status includes: controlling the vertical FOV of the detection apparatus based on the first traveling status and the correspondence.

Optionally, the controlling a vertical field of view FOV of the detection apparatus based on the first traveling status includes: when the first traveling status indicates that a speed of the intelligent driving device is greater than or equal to a preset speed, controlling the vertical FOV of the detection apparatus to be a first FOV, or controlling the angle between the lower edge of the vertical FOV of the detection apparatus and the ground to be a first angle; or when the first traveling status indicates that the speed of the intelligent driving device is less than the preset speed or the intelligent driving device is in a parking state, controlling the vertical FOV of the detection apparatus to be a second FOV, or controlling the angle between the lower edge of the vertical FOV of the detection apparatus and the ground to be a second angle, where the first FOV is less than the second FOV, and the first angle is less than the second angle.

FIG. 7 is a diagram of the vertical FOV and the detection distance of the lidar in the long-distance mode according to an embodiment of this application. As shown in FIG. 7, when the speed of the vehicle is greater than or equal to the preset speed, the vertical FOV of the lidar may be controlled to be 25°, and the transmit power of the lidar may be controlled to be 60 W. The transmit power may correspond to a long detection distance (for example, 300 meters). For example, if a mounting height of the lidar is 1.2 meters, a ground blind spot is about 4.5 meters. Optionally, in the long-distance mode shown in FIG. 7, resolution of the lidar is 0.2°.

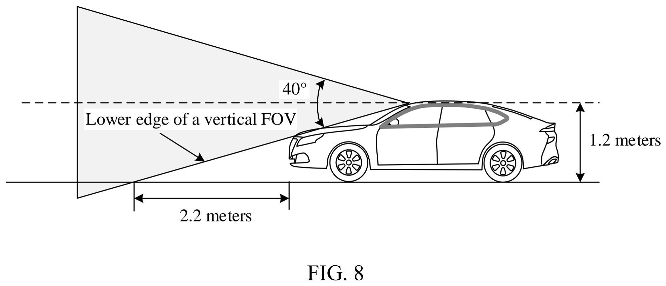

FIG. 8 is a diagram of the vertical FOV and the detection distance of the lidar in the short-distance mode according to an embodiment of this application. As shown in FIG. 8, when the speed of the vehicle is less than the preset speed or when the vehicle is in the parking state, the vertical FOV of the lidar may be controlled to be 40°, and the transmit power of the lidar may be controlled to be 30 W. The transmit power may correspond to a short detection distance (for example, 20 meters). In this case, the angle between the lower edge of the vertical FOV of the lidar and the ground is 20°. For example, if a mounting height of the lidar is 1.2 meters, a ground blind spot is about 2.2 meters. Optionally, in the short-distance mode shown in FIG. 8, resolution of the lidar is 0.3°.

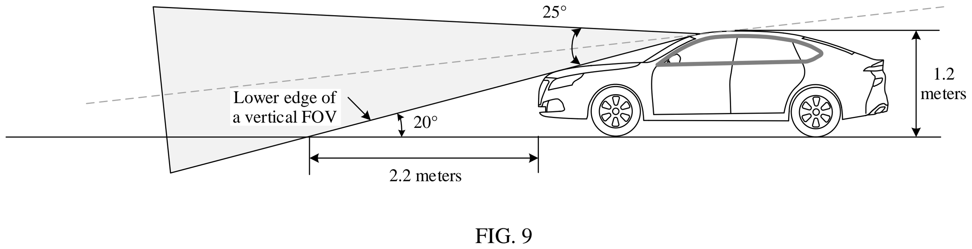

FIG. 9 is another diagram of the vertical FOV and the detection distance of the lidar in the short-distance mode according to an embodiment of this application. As shown in FIG. 9, when the speed of the vehicle is less than the preset speed or when the vehicle is in the parking state, the vertical FOV of the lidar may be controlled to be 25°, and the transmit power of the lidar may be controlled to be 10 W. The transmit power may correspond to a short detection distance (for example, 10 meters). In this case, the angle between the lower edge of the vertical FOV of the lidar and the ground is 20°. For example, if a mounting height of the lidar is 1.2 meters, a ground blind spot is about 2.2 meters. Optionally, in the short-distance mode shown in FIG. 9, resolution of the lidar is 0.2°.

Optionally, the method 600 further includes: controlling a transmit power of the detection apparatus based on the first traveling status.

Optionally, the intelligent driving device stores a correspondence between the traveling status and the transmit power, and the controlling a transmit power of the detection apparatus based on the first traveling status includes: controlling the transmit power of the detection apparatus based on the first traveling status and the correspondence.

Optionally, the controlling a transmit power of the detection apparatus based on the first traveling status includes: when the first traveling status indicates that the speed of the intelligent driving device is greater than or equal to the preset speed, controlling the transmit power of the detection apparatus to be a first transmit power; or when the first traveling status indicates that the speed of the intelligent driving device is less than the preset speed or the intelligent driving device is in the parking state, controlling the transmit power of the detection apparatus to be a second transmit power, where the first transmit power is greater than the second transmit power.

For example, the first transmit power may be 60 W.

For example, the second transmit power may be 30 W.

Optionally, the method 600 further includes: when the first traveling status indicates that the speed of the intelligent driving device is less than the preset speed or the intelligent driving device is in the parking state, controlling the detection apparatus to send a plurality of pulse signals in a first transmission cycle, where the plurality of pulse signals have different transmit powers.

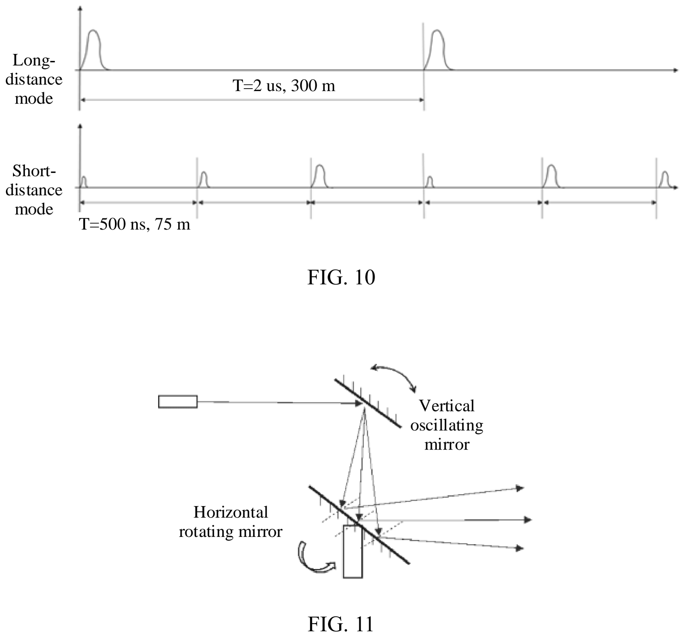

For example, FIG. 10 is a diagram of transmit powers and frequencies of the lidar in the short-distance mode and the long-distance mode according to an embodiment of this application. As shown in FIG. 10, in the long-distance mode, the transmit power of the lidar is large (for example, 60 W), each transmission cycle is 2 microseconds (microseconds, us), and a corresponding detection distance is about 300 meters. In the short-distance mode, the transmit power of the lidar is small, each transmission cycle is 1.5 microseconds (microseconds, us), and a corresponding detection distance is about 75 meters. In each transmission cycle, pulse signals of three different transmit powers are transmitted. For example, the transmit power is 10 W when a pulse signal 1 is transmitted in a first 500 nanoseconds (nanoseconds, ns), the transmit power is 20 W when a pulse signal 2 is transmitted in a second 500 ns, and the transmit power is 30 W when a pulse signal 3 is transmitted in a third 500 ns.

In the short-distance mode, the detection distance of the lidar can be reduced by reducing the transmit power of the lidar when the lidar transmits the pulse signal, thereby reducing spurious noise of laser and facilitating human eye safety. In addition, in the short-distance mode, a plurality of pulse signals with different energy are continuously transmitted in one transmission cycle, so that ranging of targets with different reflectivity can be implemented. For example, a pulse signal with a low transmit power is used to resolve a problem that a dynamic range of a receiving component is insufficient, and avoid saturation of an echo signal of a target with high reflectivity. For another example, a pulse signal with a high transmit power can be used to improve a detection capability of a target with low reflectivity.

Optionally, the method 600 further includes: processing, based on the transmit powers of the plurality of pulse signals, an echo signal received by the detection apparatus.

In this embodiment of this application, the echo signal received by the detection apparatus may be processed based on the transmit powers of the plurality of pulse signals. In this way, crosstalk between different types of laser can be prevented by performing encoding or energy sorting on a plurality of pulse signals with different transmit powers.

For example, in the short-distance mode shown in FIG. 10, transmit powers of pulse signals sent by the lidar in one transmission cycle are increased sequentially, and energy of the echo signal received by the lidar should also be increased sequentially. If energy of the received echo signal is not sequentially increased, the intelligent driving device may consider that the received echo signal is spurious noise.

Optionally, the detection apparatus includes a vertical oscillating mirror, and the controlling a vertical field of view FOV of the detection apparatus includes: controlling a scanning range of the vertical oscillating mirror.

For example, FIG. 11 is a diagram of a vertical FOV adjustment manner according to an embodiment of this application.

In the short-distance mode, lidars based on different scanning architectures adopt different adjustment modes. A scanning structure that is discrete vertically and horizontally may be implemented by increasing a scanning range (or an oscillating angle) of the vertical oscillating mirror. As shown in FIG. 11, the vertical FOV may be increased from 25° to 40° by increasing the scanning range of the vertical oscillating mirror.

Optionally, the detection apparatus is a micro-electro-mechanical system (micro-electro-mechanical system, MEMS) lidar, the MEMS lidar includes a micromirror, and the controlling a vertical field of view FOV of the detection apparatus includes: controlling a rotation angle of the micromirror.

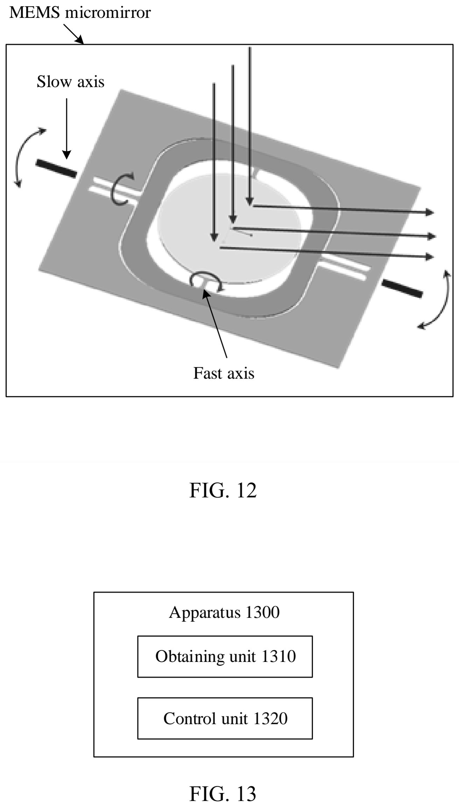

For example, FIG. 12 is a diagram of a vertical FOV adjustment manner according to an embodiment of this application.

For a two-dimensional scanning MEMS lidar, space for increasing a vertical FOV of the two-dimensional scanning MEMS lidar is limited due to a maximum rotation angle of a MEMS micromirror. In this case, the scanning range may be adjusted by adjusting a rotation angle of the MEMS micromirror (or an oscillating mirror) as a whole without increasing a scanning angle of the MEMS micromirror.

The foregoing controlling a rotation angle of the micromirror may be understood as rotating the entire micromirror around an axis.

Optionally, the MEMS micromirror may rotate around an axis, and the axis is coaxial with a slow axis of the MEMS micromirror. This can ensure that an optical center is located in a center of the MEMS micromirror after a position of the optical center is adjusted.

Optionally, before and after the slow axis of the MEMS micromirror is adjusted, the MEMS micromirror always oscillates symmetrically around a central balance position. This can prevent a rotating shaft from bearing additional stress.

Optionally, in a rotation process of the MEMS micromirror, an angle sensor may monitor a rotation angle in real time, and feed back the rotation angle to a domain controller, to ensure that point cloud angle information is compensated in a rotation angle adjustment process.

FIG. 13 is a schematic flowchart of a control apparatus 1300 according to an embodiment of this application. As shown in FIG. 13, the apparatus 1300 includes: an obtaining unit 1310, configured to obtain a first traveling status of an intelligent driving device, where the intelligent driving device includes a detection apparatus; and a control unit 1320, configured to control a vertical field of view FOV of the detection apparatus based on the first traveling status.

Optionally, the control unit 1320 is configured to: when the first traveling status indicates that a speed of the intelligent driving device is greater than or equal to a preset speed, control the vertical FOV of the detection apparatus to be a first FOV, or control an angle between a lower edge of the vertical FOV of the detection apparatus and a ground to be a first angle; or when the first traveling status indicates that the speed of the intelligent driving device is less than the preset speed or the intelligent driving device is in a parking state, control the vertical FOV of the detection apparatus to be a second FOV, or control the angle between the lower edge of the vertical FOV of the detection apparatus and the ground to be a second angle, where the first FOV is less than the second FOV, and the first angle is less than the second angle.

Optionally, the control unit 1320 is further configured to control a transmit power of the detection apparatus based on the first traveling status.

Optionally, the control unit 1320 is further configured to: when the first traveling status indicates that the speed of the intelligent driving device is greater than or equal to the preset speed, control the transmit power of the detection apparatus to be the first transmit power; or when the first traveling status indicates that the speed of the intelligent driving device is less than the preset speed or the intelligent driving device is in the parking state, control the transmit power of the detection apparatus to be a second transmit power, where the first transmit power is greater than the second transmit power.

Optionally, the control unit 1320 is configured to: when the first traveling status indicates that the speed of the intelligent driving device is less than the preset speed or the intelligent driving device is in the parking state, control the detection apparatus to send a plurality of pulse signals in a first transmission cycle, where the plurality of pulse signals have different transmit powers.

Optionally, the apparatus 1300 further includes: a signal processing unit, configured to process, based on the transmit powers of the plurality of pulse signals, an echo signal received by the detection apparatus.

Optionally, the detection apparatus includes a vertical oscillating mirror, and the control unit 1320 is configured to control a scanning range of the vertical oscillating mirror.

Optionally, the detection apparatus is a micro-electro-mechanical system MEMS lidar, the MEMS lidar includes a micromirror, and the control unit 1320 is configured to control a rotation angle of the micromirror.

Optionally, the detection apparatus is a lidar.

For example, the obtaining unit 1310 may be the computing platform, or a processing circuit, a processor, or a controller on the computing platform in FIG. 1. For example, the obtaining unit 1310 is the processor 121 on the computing platform. The processor 121 may obtain the traveling status of the intelligent driving device.

For another example, the control unit 1320 may be the computing platform in FIG. 1, or a processing circuit, a processor, or a controller on the computing platform in FIG. 1. For example, the control unit 1320 is the processor 122 on the computing platform. The processor 122 may control the vertical FOV of the detection apparatus based on the traveling status of the intelligent driving device obtained by the processor 121. For example, when the intelligent driving device is in a high-speed cruise state, the processor 122 may control the vertical FOV of the lidar to be the first FOV. When the intelligent driving device is in a low-speed state or a parking state, the processor 122 may control the vertical FOV of the lidar to be the second FOV, where the second FOV is greater than the first FOV.

A function implemented by the obtaining unit 1310 and a function implemented by the control unit 1320 may be implemented by different processors, or may be implemented by a same processor. This is not limited in embodiments of this application.

It should be understood that division of the units in the foregoing apparatuses is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in an intelligent driving device, the processing unit may be the processors 121 to 12n shown in FIG. 1.

An embodiment of this application further provides a control system. The control system may include a detection apparatus and a computing platform. The computing platform includes the apparatus 1300.

An embodiment of this application further provides a detection apparatus (for example, a lidar). The detection apparatus may include the foregoing apparatus 1300.

An embodiment of this application further provides an intelligent driving device. The intelligent driving device may include the control apparatus 1300 or the control system.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, like a random-access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random-access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random-access memory (random-access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining a first traveling status of an intelligent driving device, wherein the intelligent driving device comprises a detection apparatus; and
controlling a vertical field of view FOV of the detection apparatus based on the first traveling status.

2. The method according to claim 1, wherein the controlling a vertical field of view FOV of the detection apparatus based on the first traveling status comprises:
when the first traveling status indicates that a speed of the intelligent driving device is greater than or equal to a preset speed, controlling the vertical FOV of the detection apparatus to be a first FOV, or controlling an angle between a lower edge of the vertical FOV of the detection apparatus and a ground to be a first angle; or
when the first traveling status indicates that the speed of the intelligent driving device is less than the preset speed or the intelligent driving device is in a parking state, controlling the vertical FOV of the detection apparatus to be a second FOV, or controlling the angle between the lower edge of the vertical FOV of the detection apparatus and the ground to be a second angle, wherein
the first FOV is less than the second FOV, and the first angle is less than the second angle.

3. The method according to claim 1 or 2, wherein the method further comprises:
controlling a transmit power of the detection apparatus based on the first traveling status.

4. The method according to claim 3, wherein the controlling a transmit power of the detection apparatus based on the first traveling status comprises:
when the first traveling status indicates that the speed of the intelligent driving device is greater than or equal to the preset speed, controlling the transmit power of the detection apparatus to be a first transmit power; or
when the first traveling status indicates that the speed of the intelligent driving device is less than the preset speed or the intelligent driving device is in the parking state, controlling the transmit power of the detection apparatus to be a second transmit power, wherein
the first transmit power is greater than the second transmit power.

5. The method according to any one of claims 1 to 4, wherein the method further comprises:
when the first traveling status indicates that the speed of the intelligent driving device is less than the preset speed or the intelligent driving device is in the parking state, controlling the detection apparatus to send a plurality of pulse signals in a first transmission cycle, wherein the plurality of pulse signals have different transmit powers.

6. The method according to claim 5, wherein the method further comprises:
processing, based on the transmit powers of the plurality of pulse signals, an echo signal received by the detection apparatus.

7. The method according to any one of claims 1 to 6, wherein the detection apparatus comprises a vertical oscillating mirror, and the controlling a vertical field of view FOV of the detection apparatus comprises:
controlling a scanning range of the vertical oscillating mirror.

8. The method according to any one of claims 1 to 6, wherein the detection apparatus is a micro-electro-mechanical system MEMS lidar, the MEMS lidar comprises a micromirror, and the controlling a vertical field of view FOV of the detection apparatus comprises:
controlling a rotation angle of the micromirror.

9. The method according to any one of claims 1 to 8, wherein the detection apparatus is a lidar.

10. A control apparatus, comprising:
an obtaining unit, configured to obtain a first traveling status of an intelligent driving device, wherein the intelligent driving device comprises a detection apparatus; and
a control unit, configured to control a vertical field of view FOV of the detection apparatus based on the first traveling status.

11. The apparatus according to claim 10, wherein the control unit is configured to:
when the first traveling status indicates that a speed of the intelligent driving device is greater than or equal to a preset speed, control the vertical FOV of the detection apparatus to be a first FOV, or control an angle between a lower edge of the vertical FOV of the detection apparatus and a ground to be a first angle; or
when the first traveling status indicates that the speed of the intelligent driving device is less than the preset speed or the intelligent driving device is in a parking state, control the vertical FOV of the detection apparatus to be a second FOV, or control the angle between the lower edge of the vertical FOV of the detection apparatus and the ground to be a second angle, wherein
the first FOV is less than the second FOV, and the first angle is less than the second angle.

12. The apparatus according to claim 10 or 11, wherein the control unit is further configured to:
control a transmit power of the detection apparatus based on the first traveling status.

13. The apparatus according to claim 12, wherein the control unit is configured to:
when the first traveling status indicates that the speed of the intelligent driving device is greater than or equal to the preset speed, control the transmit power of the detection apparatus to be a first transmit power; or
when the first traveling status indicates that the speed of the intelligent driving device is less than the preset speed or the intelligent driving device is in the parking state, control the transmit power of the detection apparatus to be a second transmit power, wherein
the first transmit power is greater than the second transmit power.

14. The apparatus according to any one of claims 10 to 13, wherein the control unit is configured to:
when the first traveling status indicates that the speed of the intelligent driving device is less than the preset speed or the intelligent driving device is in the parking state, control the detection apparatus to send a plurality of pulse signals in a first transmission cycle, wherein the plurality of pulse signals have different transmit powers.

15. The apparatus according to claim 14, wherein the apparatus further comprises:
a signal processing unit, configured to process, based on the transmit powers of the plurality of pulse signals, an echo signal received by the detection apparatus.

16. The apparatus according to any one of claims 10 to 15, wherein the detection apparatus comprises a vertical oscillating mirror, and the control unit is configured to:
control a scanning range of the vertical oscillating mirror.

17. The apparatus according to any one of claims 10 to 15, wherein the detection apparatus is a micro-electro-mechanical system MEMS lidar, the MEMS lidar comprises a micromirror, and the control unit is configured to:
control a rotation angle of the micromirror.

18. The apparatus according to any one of claims 10 to 17, wherein the detection apparatus is a lidar.

19. A control apparatus, comprising:
a memory, configured to store a computer program; and
a processor, configured to execute the computer program stored in the memory, so that the apparatus performs the method according to any one of claims 1 to 9.

20. A control system, wherein the control system comprises a detection apparatus and a computing platform, and the computing platform comprises the control apparatus according to any one of claims 10 to 19.

21. An intelligent driving device, comprising the control apparatus according to any one of claims 10 to 19, or comprising the control system according to claim 20.

22. The intelligent driving device according to claim 21, wherein the intelligent driving device is a vehicle.

23. A computer-readable storage medium, wherein the computer-readable storage medium stores a computer program, and when the computer program is executed by a computer, the method according to any one of claims 1 to 9 is implemented.

24. A chip, comprising a circuit configured to perform the method according to any one of claims 1 to 9.
